# EUROPEAN PATENT APPLICATION

(11) **EP 4 421 136 A1**
(43) Date of publication of application: **28.08.2024**
(21) Application number: 22883323.2
(22) Date of filing: 30.09.2022
(51) Int. Cl.: C09D 133/14, C09D 167/00, C09D 171/00, C09D 183/04, C09D 7/63

(54) **PAINT COMPOSITION, COATED ARTICLE, AND METHOD FOR FORMING CURED FILM**

(30) Priority: 22.10.2021 JP 2021172963
(71) Applicant: SHIN-ETSU CHEMICAL CO., LTD., Tokyo 1000005 (JP)
(72) Inventor: ASO, Fumihiro, Annaka-shi, Gunma 379-0224 (JP)
(74) Representative: Mewburn Ellis LLP
(86) International application number: PCT/JP2022/036758
(87) International publication number: WO 2023/068016

(57) **Abstract**

Provided is a paint composition that can be easily manufactured and provides a cured film having excellent hardness, chemical resistance, antifouling properties, and weather resistance, the paint composition comprising:
100 parts by mass of (A) one or more polyols selected from acrylic polyols, polyester polyols, and polyether polyols;
0.5 to 20 parts by mass of (B) a silane coupling agent having an isocyanurate skeleton; and
5 to 100 parts by mass of (C) an organopolysiloxane represented by formula (I)

(SiO_{4/2})ₐ (R¹SiO_{3/2})_{b} (R¹₂SiO_{2/2})_{c} (R¹₃SiO_{1/2})_{d} (R²O_{1/2})ₑ (I)

(wherein, each R¹ independently denotes a substituted or unsubstituted C1-12 monovalent hydrocarbon group, R² denotes a hydrogen atom or a C1-6 alkyl group, a, b, c, and d are numbers satisfying 0 ≤ a ≤ 1, 0 ≤ b ≤ 1, 0 ≤ c ≤ 0.5, 0 ≤ d < 1, a + b + c + d = 1, and 0.5 < (a + b) ≤ 1, and e is a number satisfying 0 < e ≤ 4).

## Description

### TECHNICAL FIELD

This invention relates to a coating composition, a coated article, and a method for forming a cured coating. More particularly, it relates to a coating composition containing an organic resin and an organopolysiloxane, a coated article having a cured coating of the coating composition, and a method for forming a cured coating of the coating composition.

### BACKGROUND ART

Coating compositions composed mainly of organopolysiloxane resins are widely used in buildings and structures of the engineering and construction field because of their excellent coating hardness, chemical resistance, weather resistance, and so forth.

Despite such advantages, the organopolysiloxane base coating compositions have the shortcomings that the curing speed is low and the coatings have poor crack resistance.

With the aim to overcome these shortcomings, it is known in the art that a composition comprising an organopolysiloxane in admixture with an organic resin such as an alkyd resin, polyester resin, acrylic resin or epoxy resin is used as a coating composition. Patent Document 1 proposes such a coating composition comprising a silyl-containing vinyl polymer, a silanol-containing organopolysiloxane, and an alkoxy-containing organopolysiloxane.

Although this composition is improved in curability and crack resistance, there remains a problem that coating strength, chemical resistance, heat resistance, and weather resistance characteristic of organopolysiloxane resin coatings are degraded.

Patent Documents 2 to 5 disclose the compounding technique of reacting an organic resin with an organosilane or organopolysiloxane. This technique suffers from the problem of general applicability because synthetic equipment is needed for the compounding of resins.

There is a need for a simple technique capable of deriving the characteristics of both an organopolysiloxane and an organic resin.

### PRIOR ART DOCUMENTS

### PATENT DOCUMENTS

Patent Document 1: JP-A H03-197548
Patent Document 2: JP-A H11-116683
Patent Document 3: JP-A H05-345877
Patent Document 4: JP 5384939
Patent Document 5: JP 6113456

### SUMMARY OF INVENTION

### TECHNICAL PROBLEM

An object of the invention, which has been made under the above-mentioned circumstances, is to provide a coating composition containing an organic resin and an organopolysiloxane, in which the coating composition can be easily prepared and gives a cured coating having excellent hardness, chemical resistance, antifouling properties, and weather resistance.

### SOLUTION TO PROBLEM

Making extensive investigations to attain the above object, the inventor has found that a coating composition prepared by mixing a polyol, a silane coupling agent having an isocyanurate skeleton, and a specific organopolysiloxane in a specific ratio can be cured by heating, and that a coating obtained from the composition satisfies the above-mentioned properties including hardness. The invention is predicated on this finding.

The invention is defined below.
1. A coating composition comprising
   (A) 100 parts by weight of one or two or more polyols selected from the group consisting of an acrylic polyol, a polyester polyol, and a polyether polyol,
   (B) 0.5 to 20 parts by weight of a silane coupling agent having an isocyanurate skeleton, and
   (C) 5 to 100 parts by weight of an organopolysiloxane represented by the following formula (I): [Chem. 1]

      (SiO_{4/2})ₐ (R¹SiO_{3/2})_{b} (R¹₂SiO_{2/2})_{c} (R¹₃SiO_{1/2})_{d} (R²O_{1/2})ₑ (I)

      wherein R¹ is each independently a C₁-C₁₂ substituted or unsubstituted monovalent hydrocarbon group, R² is a hydrogen atom or a C₁-C₆ alkyl group, a, b, c, and d are numbers satisfying 0 ≤ a ≤ 1, 0 ≤ b ≤ 1, 0 ≤ c ≤ 0.5, 0 ≤ d < 1, a + b + c + d = 1, and 0.5 ≤ (a + b) ≤ 1, and e is a number satisfying 0 < e ≤ 4.
2. The coating composition of 1 wherein the component (A) is an acrylic polyol, a polyester polyol, or both of them.
3. The coating composition of 1 or 2 wherein the component (B) is a compound represented by the following formula (II): 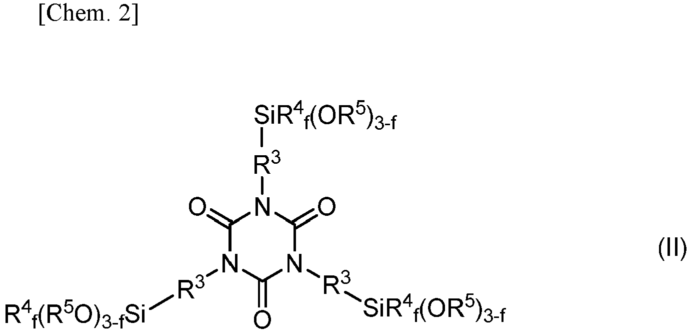 wherein R³ is each independently a C₁-C₂₀ alkylene group, R⁴ is each independently a C₁-C₁₂ substituted or unsubstituted monovalent hydrocarbon group, each R⁵ is a hydrogen atom or a C₁-C₈ alkyl group, and f is each independently 0, 1, or 2.
4. The coating composition of any one of 1 to 3 wherein in formula (I), R¹ is each independently a C₁-C₈ alkyl group, a C₂-C₈ alkenyl group, a C₆-C₁₀ aryl group, or a C₇-C₁₀ aralkyl group.
5. The coating composition of 4 wherein in formula (I), R¹ is each independently a methyl group, an ethyl group, or a phenyl group.
6. The coating composition of any one of 1 to 5 wherein in formula (I), the C₁-C₆ alkyl group accounts for at least 80% of the total number of R².
7. The coating composition of any one of 1 to 6 wherein in formula (I), a is 0 < a ≤ 1.
8. The coating composition of any one of 1 to 7 wherein in formula (I), d is 0.
9. The coating composition of any one of 1 to 8 wherein the component (C) has a kinematic viscosity of 1 to 200 mm²/s at 25°C.
10. The coating composition of any one of 1 to 9 further comprising (D) a curing catalyst.
11. A method for preparing the coating composition of any one of 1 to 10, the method comprising mixing the components (A) to (C) at 10°C to 40°C.
12. A cured coating formed from the coating composition of any one of 1 to 10.
13. A coated article comprising a substrate and the cured coating of 12 formed on at least one surface of the substrate directly or via at least one other layer.
14. A method for forming a cured coating on a substrate, comprising applying the coating composition of any one of 1 to 10 to at least one surface of a substrate directly or via at least one other layer, and then curing the coating composition.

### ADVANTAGEOUS EFFECTS OF INVENTION

The coating composition of the invention is prepared simply by mixing a polyol, a silane coupling agent having an isocyanurate skeleton, and a specific organopolysiloxane together. The composition cures into a coating having excellent hardness, chemical resistance, antifouling properties, and weather resistance. It is thus suited for the manufacture of various coated articles.

### DESCRIPTION OF EMBODIMENTS

Now the invention is described in detail.

The invention provides a coating composition comprising the following components (A) to (C):
(A) a polyol,
(B) a silane coupling agent having an isocyanurate skeleton, and
(C) an organopolysiloxane represented by the following formula(I):
   [Chem. 3]

   (SiO_{4/2})ₐ (R¹SiO_{3/2})_{b} (R¹₂SiO_{2/2})_{c} (R¹₃SiO_{1/2})_{d} (R²O_{1/2})ₑ (I)

### (1) (A) Polyol

The polyol serving as component (A) has two or more reactive hydroxy groups in one molecule and reacts with component (B) and component (C) which have a hydrolyzable silyl group in the presence or absence of a curing catalyst to form a cross-linked structure.

Examples of the polyol include an acrylic polyol that is a (co)polymer of a (meth)acrylic monomer having a hydroxy group and any other (meth)acrylic monomers; a polyester polyol that is a condensation polymer of a polybasic acid and a polyhydric alcohol (including an alkyd polyol that is a condensation polymer of a polybasic acid and a fatty acid with a polyhydric alcohol); and a polyether polyol that is an addition polymer of a polyhydric alcohol and an alkylene oxide.

Among these, the acrylic polyol, polyester polyol, or both of them are preferred. The acrylic polyol is particularly preferred because the resulting coating is excellent in transparency and gloss.

As used herein, the (meth)acrylic monomer is intended to mean both an acrylic monomer and a methacrylic monomer.

Specific examples of the (meth)acrylic monomer having a hydroxy group serving as a starting monomer of the acrylic polyol include hydroxyalkyl esters of various α,β-ethylenically unsaturated carboxylic acids such as 2-hydroxyethyl (meth)acrylate, 2-hydroxypropyl (meth)acrylate, 3-hydroxypropyl (meth)acrylate, 2-hydroxybutyl (meth)acrylate, 3-hydroxybutyl (meth)acrylate, 4-hydroxybutyl (meth)acrylate, 3-chloro-2-hydroxypropyl (meth)acrylate, di-2-hydroxyethyl fumarate, mono-2-hydroxyethylmonobutyl fumarate, polyethylene glycol mono(meth)acrylate, polypropylene glycol mono(meth)acrylate, and "Placcel FM or Placcel FA" (caprolactone addition monomer manufactured by Daicel Corporation), and adducts thereof with ε-caprolactone.

Among these, 2-hydroxyethyl (meth)acrylate is preferred because of its ease of reaction.

Other (meth)acrylic monomer copolymerizable with the (meth)acrylic monomer having a hydroxy group is not particularly limited, and a known monomer can be used. A vinyl monomer can also be copolymerized.

Specific examples thereof include alkyl (meth)acrylates having C₁-C₂₂ alkyl groups such as methyl (meth)acrylate, ethyl (meth)acrylate, n-propyl (meth)acrylate, n-butyl (meth)acrylate, isobutyl (meth)acrylate, tert-butyl (meth)acrylate, 2-ethylhexyl (meth)acrylate, and lauryl (meth)acrylate; aralkyl (meth)acrylates such as benzyl (meth)acrylate and 2-phenylethyl (meth)acrylate; cycloalkyl (meth)acrylates such as cyclohexyl (meth) acrylate and isobornyl (meth) acrylate; ω-alkoxyalkyl (meth)acrylates such as 2-methoxyethyl (meth)acrylate and 4-methoxybutyl (meth)acrylate; aromatic vinyl monomers such as styrene, p-tert-butylstyrene, α-methylstyrene, and vinyltoluene; vinyl carboxylates such as vinyl acetate, vinyl propionate, vinyl pivalate, and vinyl benzoate; alkyl crotonates such as methyl crotonate and ethyl crotonate; dialkyl esters of unsaturated dibasic acids such as dimethyl maleate, di-n-butyl maleate, dimethyl fumarate, and dimethyl itaconate; α-olefins such as ethylene and propylene; fluoroolefins such as vinylidene fluoride, tetrafluoroethylene, hexafluoropropylene, and chlorotrifluoroethylene; alkyl vinyl ethers such as ethyl vinyl ether and n-butyl vinyl ether; cycloalkyl vinyl ethers such as cyclopentyl vinyl ether and cyclohexyl vinyl ether; and tertiary amide group-containing monomers such as N,N-dimethyl(meth)acrylamide, N-(meth)acryloylmorpholine, N-(meth)acryloylpyrrolidine, and N-vinylpyrrolidone.

When these monomers are copolymerized, a polymerization method, a solvent, and a polymerization initiator are not particularly limited. For example, the polymerization can be carried out by any of various polymerization methods such as bulk radical polymerization, solution radical polymerization, and nonaqueous dispersion radical polymerization, optionally using a solvent such as a hydrocarbon, e.g., hexane, octane, toluene, and xylene; a ketone, e.g., methyl ethyl ketone; an ester, e.g., ethyl acetate; or an alcohol, e.g., isopropyl alcohol in the presence of a polymerization initiator such as 2,2'-azobis(isobutyronitrile), 2,2'-azobis(2,4-dimethylvaleronitrile), 2,2'-azobis(2-methylbutyronitrile), tert-butyl peroxypivalate, tert-butyl peroxybenzoate, tert-butyl peroxy-2-ethylhexanoate, di-tert-butyl peroxide, cumene hydroperoxide, or diisopropyl peroxycarbonate.

It is preferred from the aspects of curability, weather resistance, and coating efficiency that the polyol as component (A) has a weight average molecular weight (Mw) of 1,000 to 100,000, more preferably 2,000 to 80,000 as measured by gel permeation chromatography versus polystyrene standards although the molecular weight is not particularly limited.

The amount of hydroxy groups contained in component (A) is not particularly limited. The hydroxyl value is preferably 10 to 200 mgKOH/g, more preferably 20 to 180 mgKOH/g. As used herein, the hydroxyl value is measured according to JIS K 0070:1992.

As component (A), a commercially available product can be used. Examples thereof include Acrydic A-801P (acrylic polyol), Acrydic 53-580 (acrylic polyol), and Burnock D-220 (polyester polyol) (all manufactured by DIC Corporation).

Component (A) may be used alone or in admixture of two or more.

### (2) (B) Silane coupling agent having isocyanurate skeleton

Component (B) is the silane coupling agent having an isocyanurate skeleton and preferably having at least one hydrolyzable silyl group or silanol group in one molecule.

Examples of the hydrolyzable silyl group include trialkoxysilyl groups such as trimethoxysilyl and triethoxysilyl groups; organodialkoxysilyl groups such as methyldimethoxysilyl and ethyldiethoxysilyl groups; diorganoalkoxysilyl groups such as dimethylmonomethoxysilyl and diethylmonoethoxysilyl groups; and halosilyl groups such as trichlorosilyl, dichloromethylsilyl, and chlorodimethylsilyl groups. Among these, trialkoxysilyl groups such as trimethoxysilyl and triethoxysilyl groups are preferred, and a trimethoxysilyl group is more preferred.

An example of the silane coupling agent having an isocyanurate skeleton is shown, for example, by the following formula (II).

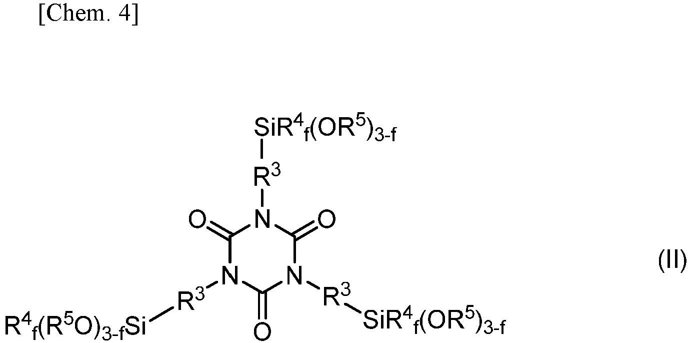

Herein, R³ is each independently a C₁-C₂₀ alkylene group, R⁴ is each independently a C₁-C₁₂ substituted or unsubstituted monovalent hydrocarbon group, each R⁵ is a hydrogen atom or a C₁-C₈ alkyl group, and f is each independently 0, 1, or 2.

The alkylene group represented by R³ is preferably a C₁-C₈, more preferably C₁-C₄ alkylene group.

The alkylene group represented by R³ may be straight or branched. Specific examples thereof include methylene, ethylene, trimethylene, propylene, tetramethylene, pentamethylene, hexamethylene, heptamethylene, octamethylene, nonamethylene, decamethylene, undecamethylene, dodecamethylene, tridecamethylene, tetradecamethylene, pentadecamethylene, hexadecamethylene, heptadecamethylene, octadecamethylene, nonadecamethylene, and eicosadecylene groups. Among these, R³ is preferably a methylene, ethylene, or trimethylene group, more preferably a trimethylene group.

The monovalent hydrocarbon group represented by R⁴ may be straight, branched, or cyclic. Examples thereof include C₁-C₁₂, preferably C₁-C₈ alkyl groups; C₂-C₁₂, preferably C₂-C₈ alkenyl groups; C₆-C₁₂, preferably C₆-C₁₀ aryl groups; and C₇-C₁₂, preferably C₇-C₁₀ aralkyl groups.

Examples of the C₁-C₁₂ alkyl group include methyl, ethyl, n-propyl, i-propyl, n-butyl, i-butyl, s-butyl, t-butyl, n-pentyl, n-hexyl, n-heptyl, and n-octyl groups.

Examples of the C₂-C₁₂ alkenyl group include vinyl and allyl groups.

Examples of the C₆-C₁₂ aryl group include phenyl and naphthyl groups.

Examples of the C₇-C₁₂ aralkyl group include benzyl and phenylethyl groups.

In these monovalent hydrocarbon groups, some or all of the carbon-bonded hydrogen atoms may be substituted by halogen atoms such as chlorine, fluorine, or bromine atoms, or other substituents such as a cyano group. Examples thereof include halogen-substituted hydrocarbon groups such as chloromethyl, bromoethyl, trifluoropropyl, chlorophenyl, and bromophenyl; and cyano-substituted hydrocarbon groups such as a cyanoethyl group.

Among these, R⁴ is preferably a methyl, ethyl, n-propyl, i-propyl, n-butyl, i-butyl, phenyl, benzyl, or vinyl group, with a methyl, ethyl, or phenyl group being more preferred.

The alkyl group for R⁵ is preferably a C₁-C₈, more preferably C₁-C₆ alkyl group and may be straight or branched. Specific examples thereof include the same groups as C₁-C₈ alkyl groups among the exemplified alkyl groups for R⁴. Among these, C₁-C₃ alkyl groups are preferred, and methyl and ethyl groups are more preferred.

The subscript "f' is 0, 1, or 2, with 0 being preferred.

Specific examples of component (B) include
1,3,5-tris(3-trimethoxylylpropyl) isocyanurate,
1,3,5-tris(3-triethoxysilylpropyl) isocyanurate,
1,3,5-tris(3-tripropoxysilylpropyl) isocyanurate,
1,3,5-tris(3-methyldimethoxysilylpropyl) isocyanurate,
1,3,5-tris(3-methyldiethoxysilylpropyl) isocyanurate,
1,3,5-tris(3-methyldipropoxysilylpropyl) isocyanurate,
1,3,5-tri s(3 -phenyldimethoxysilylpropyl) isocyanurate,
1,3,5-tris(3-phenyldiethoxysilylpropyl) isocyanurate,
1,3,5-tris(3-phenyldipropoxysilylpropyl) isocyanurate,
1,3,5-tris(2-trimethoxysilylethyl) isocyanurate,
1,3,5-tris(2-triethoxysilylethyl) isocyanurate,
1,3,5-tris(2-tripropoxysilylethyl) isocyanurate,
1,3,5-tris(2-methyldimethoxysilylethyl) isocyanurate,
1,3,5 -tri s(2-methyldi ethoxy silylethyl) isocyanurate,
1,3,5-tris(2-methyldipropoxysilylethyl) isocyanurate,
1,3,5-tris(2-phenyldimethoxysilylethyl) isocyanurate,
1,3,5-tris(2-phenyldiethoxysilylethyl) isocyanurate, and
1,3,5-tris(2-phenyldipropoxysilylethyl) isocyanurate.

Among these, 1,3,5-tris(3-trimethoxylylpropyl) isocyanurate and 1,3,5-tris(3-triethoxysilylpropyl) isocyanurate are preferred, and 1,3,5-tris(3-trimethoxylylpropyl) isocyanurate is more preferred.

As component (B), commercially available products may be used. Examples thereof are, but not limited to, KBM-9659 (manufactured by Shin-Etsu Chemical Co., Ltd.) and the like.

Component (B) may be used alone or in admixture of two or more.

The amount of component (B) is 0.5 to 20 parts by weight per 100 parts by weight of the nonvolatile content of component (A). When the amount of component (B) is less than 0.5 parts by weight, the resulting cured coating is inferior in chemical resistance, antifouling properties, and weather resistance. When the amount of component (B) is more than 20 parts by weight, the resulting cured coating is inferior in hardness.

### (3) (C) Organopolysiloxane

Component (C) is the organopolysiloxane having a siloxane unit constitution ratio represented by the following formula (I).

[Chem. 5]

(SiO_{4/2})ₐ (R¹SiO_{3/2})_{b} (R¹₂SiO_{2/2})_{c} (R¹₃SiO_{1/2})_{d} (R²O_{1/2})ₑ (I)

Herein, R¹ is each independently a C₁-C₁₂ substituted or unsubstituted monovalent hydrocarbon group, R² is a hydrogen atom or a C₁-C₆ alkyl group, a, b, c, and d are numbers satisfying 0 ≤ a ≤ 1, 0 ≤ b ≤ 1, 0 ≤ c ≤ 0.5, 0 ≤ d < 1, a + b + c + d = 1, and 0.5 ≤ (a + b) ≤ 1, and e is a number satisfying 0 < e ≤ 4.

The monovalent hydrocarbon group represented by R¹ may be straight, branched, or cyclic. Examples thereof include C₁-C₁₂, preferably C₁-C₈ alkyl groups; C₂-C₁₂, preferably C₂-C₈ alkenyl groups; C₆-C₁₂, preferably C₆-C₁₀ aryl groups; and C₇-C₁₂, preferably C₇-C₁₀ aralkyl groups.

Examples of the C₁-C₁₂ alkyl group include methyl, ethyl, n-propyl, i-propyl, n-butyl, i-butyl, s-butyl, t-butyl, n-pentyl, n-hexyl, n-heptyl, and n-octyl groups.

Examples of the C₂-C₁₂ alkenyl group include vinyl and allyl groups.

Examples of the C₆-C₁₂ aryl group include phenyl and naphthyl groups.

Examples of the C₇-C₁₂ aralkyl group include benzyl and phenylethyl groups.

In these monovalent hydrocarbon groups, some or all of the carbon-bonded hydrogen atoms may be substituted by halogen atoms such as chlorine, fluorine, or bromine atoms, or other substituents such as a cyano group. Examples thereof include halogen-substituted hydrocarbon groups such as chloromethyl, bromoethyl, trifluoropropyl, chlorophenyl, and bromophenyl; and cyano-substituted hydrocarbon groups such as a cyanoethyl group.

Among these, R¹ is preferably a methyl, ethyl, n-propyl, i-propyl, n-butyl, i-butyl, phenyl, benzyl, or vinyl group, more preferably a methyl, ethyl, or phenyl group.

Herein, at least 20% of the total number of R¹ is preferably a C₆-C₁₂ substituted or unsubstituted aryl group, more preferably an optionally halogenated C₆-C₁₂ aryl group.

Specific examples of the C₁-C₆ alkyl group represented by R² include methyl, ethyl, n-propyl, i-propyl, n-butyl, i-butyl, s-butyl, t-butyl, and n-hexyl groups. Among these, C₁-C₃ alkyl groups are preferred, and methyl and ethyl groups are more preferred.

Herein, the C₁-C₆ alkyl group preferably accounts for at least 80%, more preferably at least 90%, still more preferably 100%, of the total number of R².

The subscript "a" is a number satisfying 0 ≤ a ≤ 1. The range: 0 < a ≤ 1 is preferred, and 0.5 ≤ a ≤ 1 is more preferred, from the aspect of the hardness of a cured coating.

The subscript "b" is a number satisfying 0 ≤ b ≤ 1. The range: 0.1 ≤ b ≤ 0.8 is preferred, and 0.2 ≤ b ≤ 0.6 is more preferred, from the aspect of mar resistance of a cured coating.

The subscript "c" is a number satisfying 0 ≤ c ≤ 0.5. The range: 0 ≤ c ≤ 0.4 is preferred, and 0.1 ≤ c ≤ 0.3 is more preferred, from the aspects of curability of the composition and hardness of a cured coating.

The subscript "d" is a number satisfying 0 ≤ d < 1. The range: 0 ≤ d ≤ 0.4 is preferred, and 0 is more preferred, from the aspects of curability of the composition and hardness of a cured coating.

The subscript "e" is a number satisfying 0 < e ≤ 4. The range: 0 < e ≤ 3 is preferred, and 0 < e ≤ 1 is more preferred, from the aspects of crack resistance, water resistance, and weather resistance of a cured coating, and the range is effective for inhibiting condensation reaction of condensable functional groups.

Notably, a + b + c + d = 1, and a + b is a number satisfying 0.5 < (a + b) ≤ 1, preferably 0.7 ≤ (a + b) ≤ 1.

Component (C) may be prepared by the method of preparing ordinary organopolysiloxanes, for example, obtained from hydrolytic condensation of a hydrolyzable group-containing silane compound.

The hydrolyzable group-containing silane compound is not particularly limited as long as it is a silane compound containing 1 to 4 hydrolyzable groups such as a chloro or alkoxy group on silicon atom(s) and having an organic substituent satisfying the above-mentioned conditions.

Specific examples thereof include tetrachlorosilane, tetramethoxysilane, tetraethoxysilane, tetraisopropoxysilane, tetrabutoxysilane, methyltrichlorosilane, methyltrimethoxysilane, methyltriethoxysilane, methyltriisopropoxysilane, methyltributoxysilane, dimethyldimethoxysilane, dimethyldiethoxysilane, dimethyldiisopropoxysilane, trimethylchlorosilane, trimethylmethoxysilane, trimethylethoxysilane, trimethylisopropoxysilane, ethyltrichlorosilane, ethyltrimethoxysilane, ethyltriethoxysilane, propyltrichlorosilane, propyltrimethoxysilane, propyltriethoxysilane, butyltrichlorosilane, butyltrimethoxysilane, butyltriethoxysilane, hexyltrichlorosilane, hexyltrimethoxysilane, hexyltriethoxysilane, phenyltrichlorosilane, phenyltrimethoxysilane, phenyltriethoxysilane, cyclohexyltrichlorosilane, cyclohexyltrimethoxysilane, cyclohexyltriethoxysilane, propylmethyldichlorosilane, propylmethyldimethoxysilane, propylmethyldiethoxysilane, hexylmethyldichlorosilane, hexylmethyldimethoxysilane, hexylmethyldiethoxysilane, phenylmethyldichlorosilane, phenylmethyldimethoxysilane, phenylmethyldiethoxysilane, diphenyldichlorosilane, diphenyldimethoxysilane, diphenyldiethoxysilane, dimethylphenylchlorosilane, dimethylphenylmethoxysilane, dimethylphenylethoxysilane, and partial hydrolyzates thereof. Among these, methoxysilane and ethoxysilane are preferred for ease of operation, ease of distillation of by-products, and availability of reactants.

The silane compound may be used alone or in admixture of two or more.

In the practice of hydrolysis, a hydrolytic catalyst may be used. Any well-known hydrolytic catalysts may be used. Catalysts whose aqueous solutions exhibit an acidity corresponding to pH 1 to 7 are preferred, and acidic hydrogen halides, sulfonic acids, carboxylic acids, acidic or weakly acidic inorganic salts, and solid acids such as ion exchange resins, are especially preferred.

Examples of the acidic catalysts include hydrogen fluoride, hydrochloric acid, nitric acid, sulfuric acid, methanesulfonic acid, p-toluenesulfonic acid, formic acid, acetic acid, maleic acid, benzoic acid, lactic acid, and cation exchange resins having a sulfonic acid or carboxylic acid group on their surface.

Although the amount of the hydrolytic catalyst used is not particularly limited, the amount is preferably 0.0002 to 0.5 mol per mole of the hydrolyzable silane, in view of promotion of reaction and easy removal of the catalyst at the end of reaction.

Although the weight ratio of the hydrolyzable silane to water needed in hydrolytic condensation reaction is not particularly limited, a ratio of 0.1 to 10 mol of water per mole of the hydrolyzable silane is preferred for preventing the catalyst from deactivation and allowing the reaction to run to a full extent, and from the aspect of easy removal of water at the end of reaction.

Although the temperature during hydrolytic condensation reaction is not particularly limited, a temperature of -10°C to 150°C is preferred for enhancing the reaction rate and preventing an organic functional group on the hydrolyzable silane from being decomposed.

Upon hydrolytic condensation, an organic solvent may be used. Examples of the organic solvent used herein include methanol, ethanol, propanol, acetone, methyl ethyl ketone, methyl isobutyl ketone, tetrahydrofuran, toluene, and xylene.

Component (C) preferably contains at least 85% by weight, more preferably at least 90% by weight of non-volatiles exclusive of the solvent and the like. More volatiles can cause degradation of outer appearance and lowering of mechanical properties due to formation of voids upon curing of the composition.

Although the molecular weight of component (C) is not particularly limited, it preferably has a weight average molecular weight (Mw) of 500 to 10,000 as measured by gel permeation chromatography versus polystyrene standards.

Although the viscosity of component (C) is not particularly limited, it preferably has a kinematic viscosity of 1 to 200 mm²/s, more preferably 1 to 150 mm²/s, even more preferably 3 to 120 mm²/s as measured at 25°C by a Cannon-Fenske viscometer according to JIS-Z-8803.

The amount of component (C) is, in terms of nonvolatile content, 5 to 100 parts by weight, preferably 8 to 60 parts by weight per 100 parts by weight of the nonvolatile content of component (A). When the amount of component (C) is less than the range, the resulting cured coating has insufficient weather resistance and antifouling properties. When the amount of component (C) is more than the range, the cured coating has insufficient chemical resistance, crack resistance, and weather resistance.

Component (C) may be a single composition or a mixture of plural compounds of different compositions. In particular, the composition of the invention can be preferably prepared by mixing a plurality of compounds of different average compositions.

### (4) (D) Curing catalyst

The coating composition of the invention may contain a curing catalyst. The curing catalyst is not particularly limited as long as it is commonly used in organosiloxane-based coating compositions. Organometallic compounds are preferred, for example, alkoxide compounds, chelate compounds, and ester compounds of metals such as Ti, Al, Zr and Sn, with catalysts containing organotin compounds being especially preferred.

Examples of the metal alkoxide compound include aluminum alkoxides such as aluminum trimethoxide, aluminum triethoxide, aluminum tri-n-propoxide, aluminum triisopropoxide, aluminum tri-n-butoxide, aluminum triisobutoxide, aluminum tri-s-butoxide, and aluminum tri-t-butoxide; titanium alkoxides such as tetramethyl titanate, tetraethyl titanate, tetra-n-propyl titanate, tetraisopropyl titanate, tetra-n-butyl titanate, tetra-isobutyl titanate, tetra-t-butyl titanate, tetra-n-hexyl titanate, tetraisooctyl titanate, and tetra-n-lauryl titanate; zirconium alkoxides such as tetraethyl zirconate, tetra-n-propyl zirconate, tetraisopropyl zirconate, tetra-n-butyl zirconate, tetra-s-butyl zirconate, tetra-t-butyl zirconate, tetra-n-pentyl zirconate, tetra-t-pentyl zirconate, tetra-t-hexyl zirconate, tetra-n-heptyl zirconate, tetra-n-octyl zirconate, and tetra-n-stearyl zirconate; and tin alkoxides such as dibutyltin dibutoxide.

Examples of the metal chelate compound include aluminum chelate compounds such as aluminum tris(ethyl acetoacetate), aluminum tris(n-propyl acetoacetate), aluminum tris(isopropyl acetoacetate), aluminum tris(n-butyl acetoacetate), aluminum isopropoxybis(ethyl acetoacetate), tris(acetylacetonato)aluminum, tris(propionylacetonato)aluminum, diisopropoxypropionylacetonatoaluminum, acetylacetonate-bis(propionylacetonato)aluminum, monoethylacetoacetate-bis(acetylacetonato)aluminum, acetylacetonatoaluminum-di-s-butylate, methylacetoacetatoaluminum-di-s-butylate, aluminum di(methyl acetoacetate)-mono-tert-butylate, aluminum diisopropoxyethyl acetoacetate, and aluminum monoacetylacetonato-bis(ethyl acetoacetate); titanium chelate compounds such as diisopropoxy-bis(ethyl acetoacetato)titanate, diisopropoxy-bis(acetylacetonato)titanate, and di-n-butoxy-bis(acetylacetonato)titanate; zirconium chelate compounds such as tetrakis(acetylacetonato)zirconium, zirconium tetrakis(n-propyl acetoacetate), and zirconium tetrakis(ethyl acetoacetate); and tin chelate compounds, typically tin ester compounds such as dibutyltin diacetate, dibutyltin di(2-ethylhexylate), dibenzyltin di(2-ethylhexylate), dibutyltin dilaurate, dibutyltin diisooctylmaleate, and dibutyltin bis(acetylacetonate).

The tin chelate compounds such as tin ester compounds are preferred in view of chemical resistance of the resulting coating film.

Commercially available products of the tin ester compounds may also be used. Examples thereof include Neostann U-100, U-130, U-200, U-220H, U-303, U-700, U-810, U-820, and U-830 (Nitto Kasei Co., Ltd.), and BT-120S (Kaneka Corp.).

When component (D) is blended, the amount of component (D) may be an amount sufficient to cure the composition. Usually, the amount is preferably 0.01 to 20 parts by weight, more preferably 0.1 to 10 parts by weight per 100 parts by weight of the nonvolatile content of component (A).

The curing catalyst as component (D) may be used alone or in admixture of two or more.

### (5) Optional component

The coating composition of the invention may comprise optional additives as long as the benefits of the invention are not impaired.

Exemplary additives include solvents, non-reactive silicone oils, reactive silicone oils, tackifiers such as silane coupling agents other than component (B), non-reactive high molecular weight resins, fillers, leveling agents, rheology regulators, reactive diluents, non-reactive diluents, surfactants, dispersants, defoamers, dehydrating agents, anti-aging agents, antioxidants, antistatic agents, IR absorbers, UV absorbers, photostabilizers, fluorescent agents, dyes, pigments, flavors, polishing agents, anti-rusting agents, and thixotropic agents.

Each of the additives may be used alone or in admixture of two or more.

Examples of the solvents include esters such as ethyl acetate, butyl acetate, and cellosolve acetate; ketones such as acetone, methyl ethyl ketone, and methyl isobutyl ketone; aliphatic hydrocarbons such as hexane and octane; and aromatic hydrocarbons such as benzene, toluene, and xylene. These solvents may be used alone or in admixture of two or more.

When the solvent is blended, the amount is preferably 1 to 50 parts by weight, more preferably 2 to 30 parts by weight per 100 parts by weight of the total nonvolatile content of components (A) to (C).

Examples of the pigments include coloring pigments such as titanium oxide, red iron oxide, cyanine coloring pigments, carbon black, and zircon powder; extender pigments such as silica, baryta (barium hydroxide) powder, precipitated barium sulfate, barium carbonate, calcium carbonate, gypsum, clay, white carbon, diatomaceous earth, talc, magnesium carbonate, alumina white, gloss white, and calcium carbonate; zinc phosphate, zinc phosphosilicate, aluminum zinc phosphate, calcium zinc phosphate, calcium phosphate, aluminum pyrophosphate, calcium pyrophosphate, aluminum dihydrogen tripolyphosphate, aluminum metaphosphate, calcium metaphosphate, zinc oxide, zinc phosphomolybdate, aluminum phosphomolybdate, zinc, zinc oxide, zinc molybdate, calcium molybdate, borates, barium metaborate, zinc calcium cyanamide, calcium silicate, calcium metasilicate; and anti-rusting pigments such as modified silica in the form of porous silica particles having bonded thereto cations of calcium, zinc, cobalt, lead, strontium, and barium, ion exchange silica having cations bonded by ion exchange, aluminum pyrophosphate, and vanadium based compounds such as vanadium pentaoxide, calcium vanadate, and ammonium metavanadate. These may be used alone or in admixture of two or more.

When the pigment is blended in the coating composition of the invention, the amount is, in terms of nonvolatile content, preferably 5 to 100 parts by weight, more preferably 30 to 90 parts by weight per 100 parts by weight of the total nonvolatile content of components (A) to (C) in view of weather resistance of a resulting coating film.

### (6) Preparation method

The coating composition of the invention may be obtained by mixing and agitating components (A), (B), and (C), and, if necessary, component (D) and optional components in any desired order. Although the mixing conditions are not particularly limited, the mixing is preferably performed at 10°C to 40°C in consideration of workability and stability of the coating composition.

Although the viscosity of the coating composition is not particularly limited, the viscosity is preferably up to 100,000 mPa s, more preferably up to 20,000 mPa s, as measured at 25°C with a rotational viscometer when it is taken into account to facilitate molding or coating operation and inhibit formation of streaks. The lower limit of viscosity is preferably at least 10 mPa·s though not critical.

### (7) Cured coating of coating composition and coated article

A cured coating and a coated article are obtained by applying the coating composition of the invention to an object and curing the composition.

The coating technique is not particularly limited, and any well-known coating techniques, for example, spray coating, roller coating, brush coating, and flow coating may be employed.

The coating composition of the invention is curable by heating. The heating temperature is preferably 80° C to 200°C. Thereby, the cured coating exhibits excellent hardness, chemical resistance, antifouling properties, and weather resistance.

Suitable articles or objects to be coated include glass, metal materials that have been primarily treated if desire, specifically steel plates, zinc-plated steel plates, stainless steel, and aluminum; alkaline substrates such as concrete, mortar, slate, and slate roof tiles; ceramic building materials; plastics; and those having an old coating deposited thereon.

Examples of applications of the coating composition of the invention include, but are not particularly limited to, heavy-duty anticorrosive coating applications for steel structures such as bridges, electric power pylons, plants, and tanks.

The coating composition of the invention provides, by itself, a cured coating that has excellent long-term weather resistance, protects an article or object to be coated from severe environments, and maintains its aesthetic appearance. If necessary, any well-known primary and/or intermediate coating layer may be formed.

Examples of the primary coating include epoxy resin coatings, modified epoxy resin coatings, epoxy resin based glass flake coatings, epoxy resin-coated materials, ultra-thick film epoxy resin coatings, epoxy resin zinc-rich paints, inorganic zinc-rich paints, chloride rubber resin coatings, phthalate resin coatings, and epoxy ester resin coatings. Examples of the intermediate coating include epoxy resin coatings, polyurethane coatings, epoxy resin MIO coatings, phenolic resin MIO coatings, chloride rubber resin coatings, and phthalate resin coatings.

### EXAMPLES

Examples and Comparative Examples are given below for further illustrating the invention although the invention is not limited thereto. It is noted that the hydroxyl value is measured by a neutralization titration method in accordance with JIS K 0070:1992. The weight average molecular weight is measured by gel permeation chromatography (GPC, HLC-8220 manufactured by Tosoh Corp.) using tetrahydrofuran (THF) as developing solvent. The nonvolatile content is measured by a nonvolatile residue test method after drying by heating at 105°C for 3 hours on an aluminum petri dish according to JIS K 5601-1-2:2008. The kinematic viscosity is measured at 25°C with a Cannon-Fenske viscometer. The constitution ratio of siloxane units in component (C) is calculated from the measurement results of ¹H-NMR and ²⁹Si-NMR spectroscopy.

### [1] Preparation of coating composition

### [Examples 1-1 to 1-7 and Comparative Examples 1-1 to 1-4]

Coating compositions (i) to (xi) were prepared by mixing the following components at 25°C in the compositional ratios (weight ratio) given in Table 1.
<Component (A)>
   (A-1): Acrydic A-801P (acrylic polyol, nonvolatile content: 50% by weight, hydroxyl value: 50 mgKOH/g, manufactured by DIC Corporation)
   (A-2): Burnock D-220 (polyester polyol, nonvolatile content: 100% by weight, hydroxyl value: 147 mgKOH/g, manufactured by DIC Corporation)
<Component (B)>
   (B): KBM-9659 (tris-(trimethoxylylpropyl) isocyanurate, manufactured by Shin-Etsu Chemical Co., Ltd.)
<Component (C)>
   (C-1): An organopolysiloxane represented by formula (I) wherein a = 0.8, b = 0.2, c = 0, d = 0, e = 0.26, R¹ = methyl or phenyl (the proportion of the number of phenyl groups in the total number of R¹: 20%), and R² = methyl (nonvolatile content: 87% by weight, weight average molecular weight: 1,000, kinematic viscosity at 25°C: 5 mm²/s, manufactured by Shin-Etsu Chemical Co., Ltd.)
   (C-2): An organopolysiloxane represented by formula (I) wherein a = 0.1, b = 0.6, c = 0.3, d = 0, e = 0.24, R¹ = methyl or phenyl (proportion of the number of phenyl groups in the total number of R¹: 30%), and R² = methyl (nonvolatile content: 96% by weight, weight average molecular weight: 1,800, kinematic viscosity at 25°C: 100 mm²/s, manufactured by Shin-Etsu Chemical Co., Ltd.)
<Component (D)>
   (D): Neostann U-830 (dioctyltin, manufactured by Nitto Kasei Co., Ltd.)
<Component (E)>
   (E): Ethyl acetate/butyl acetate mixed solvent (weight ratio: 1:1)

**[Table 1]**

| Composition (parts by weight) | Example | | | | | | | Comparative Example | | | |
|---|---|---|---|---|---|---|---|---|---|---|---|
| | 1-1 | 1-2 | 1-3 | 1-4 | 1-5 | 1-6 | 1-7 | 1-1 | 1-2 | 1-3 | 1-4 |
| Coating composition | (i) | (ii) | (iii) | (iv) | (v) | (vi) | (vii) | (viii) | (ix) | (x) | (xi) |
| (A-1) | 200 | 200 | 200 | 200 | 200 | | 200 | 200 | 200 | 200 | 200 |
| (A-2) | | | | | | 100 | | | | | |
| (B) | 5 | 20 | 0.5 | 5 | 0.5 | 5 | 5 | 0.1 | 0.5 | 50 | 10 |
| (C-1) | 50 | 100 | 20 | 100 | 10 | 50 | | 50 | 5 | 50 | 150 |
| (C-2) | | | | | | | 50 | | | | |
| (D) | 0.2 | 0.2 | 0.1 | 0.2 | 0 | 0.2 | 0.2 | 0.2 | 0.2 | 0.2 | 0.2 |
| (E) | 10 | | 10 | 5 | 10 | 20 | 10 | 10 | 10 | 10 | 10 |

### [2] Preparation and evaluation of coated article

### [Examples 2-1 to 2-7 and Comparative Examples 2-1 to 2-4]

Each of the coating compositions (i) to (xi) of Examples 1-1 to 1-7 and Comparative Examples 1-1 to 1-4 was applied onto a metal substrate by flow coating so as to give a dry coating thickness of 30 µm, and heated at 150°C for 1 hour to form a coating.

The coated articles were evaluated for coating appearance, rubbing test, pencil hardness, antifouling test, and accelerated weather resistance, with the results shown in Table 2.

### (1) Coating appearance

On visual observation, a sample having a uniform coating surface and free of asperities due to agglomerates or cracks is rated acceptable (O), and a sample having a non-uniform coating surface and blushing, asperities due to agglomerates, and/or cracks is rated unacceptable (×).

### (2) Rubbing test

Bemcot M-3II (area: 4 cm², manufactured by Asahi Kasei Corporation) was immersed in acetone. The surface was rubbed back and forth 30 times under a load of 500 gf. After the rubbing test, the coating appearance was evaluated by visual observation.
○: No substantial changes are observed as compared with the coating appearance before the test.
△: Slight stripping and whitening were observed as compared with the coating appearance before the test.
×: Significant stripping and whitening were observed as compared with the coating appearance before the test.

### (3) Pencil hardness

The pencil hardness was measured under a load of 750 g according to JIS K 5600-5-4. A hardness of F or higher was rated as acceptable.

### (4) Antifouling test

A line was drawn on a test surface with an oil-based permanent marker (organic solvent-type marker, trade name: McKee Extra Fine, manufactured by Zebra Co., Ltd.). After being left to stand for 3 hours, it was evaluated whether or not the line could be wiped off with Bemcot M-3II (area: 4 cm², manufactured by Asahi Kasei Corporation) immersed in a mixed solvent of ethanol/toluene (weight ratio: 1/1). After completion of the test, the amount of ink remaining on the coating was visually observed and evaluated in three grades.
○: No substantial changes are observed as compared with the initial sample.
△: Ink remains slightly as compared with the initial sample.
×: Ink remains significantly as compared with the initial sample.

### (5) Accelerated weather resistance

In the accelerated weathering test, a super-accelerated weathering tester (Eye Super UV tester manufactured by Iwasaki Electric Co., Ltd.) was used. The test piece was a polyester-coated steel plate (0.8 mm × 70 mm × 60 mm). The test included 30 cycles with one cycle consisting of 3 hours of irradiation (UV intensity: 90 mW, black panel temperature: 63°C, 70% RH), 4 hours of darkening (black panel temperature: 63°C, 70% RH), and 3 hours of dewing (black panel temperature: 30°C, 90% RH) to a total of 10 hours. After the test, the coating was visually observed for swell, cracks, stripping, and gloss changes and evaluated in three grades.
○: No substantial changes are observed as compared with the initial sample.
△: Some gloss clouding is observed as compared with the initial sample.
×: Substantial gloss clouding, cracks, and stripping are observed as compared with the initial sample.

**[Table 2]**

| | Example | | | | | | | Comparative Example | | | |
|---|---|---|---|---|---|---|---|---|---|---|---|
| | 2-1 | 2-2 | 2-3 | 2-4 | 2-5 | 2-6 | 2-7 | 2-1 | 2-2 | 2-3 | 2-4 |
| Coating composition | (i) | (ii) | (iii) | (iv) | (v) | (vi) | (vii) | (viii) | (ix) | (X) | (xi) |
| Coating appearance | ○ | ○ | ○ | ○ | ○ | ○ | ○ | ○ | ○ | ○ | × |
| Rubbing test | ○ | ○ | ○ | ○ | ○ | ○ | ○ | Δ | × | ○ | Δ |
| Pencil hardness | H | F | H | 2H | F | H | F | H | HB | B | 2H |
| Antifouling test | ○ | ○ | ○ | ○ | ○ | ○ | ○ | Δ | Δ | ○ | ○ |
| Accelerated weather resistance | ○ | ○ | ○ | ○ | ○ | ○ | ○ | Δ | × | ○ | × |

As is evident from Table 2, the coatings obtained in Examples 2-1 to 2-7 were excellent in chemical resistance, hardness, antifouling properties, and weather resistance.

In contrast, the coating of Comparative Example 2-1 using the composition containing a short amount of component (B) was insufficient in chemical resistance, antifouling properties, and weather resistance. The coating of Comparative Example 2-3 using the composition containing an excess of component (B) was inferior in hardness.

The coating of Comparative Example 2-2 using the composition containing a short amount of component (C) was insufficient in chemical resistance, hardness, antifouling property, and weather resistance. The coating of Comparative Example 2-4 using the composition containing an excess of component (C) had an uneven coating surface and was inferior in chemical resistance and weather resistance.

## Claims

1. A coating composition comprising
(A) 100 parts by weight of one or two or more polyols selected from the group consisting of an acrylic polyol, a polyester polyol, and a polyether polyol,
(B) 0.5 to 20 parts by weight of a silane coupling agent having an isocyanurate skeleton, and
(C) 5 to 100 parts by weight of an organopolysiloxane represented by the following formula (I):
[Chem. 1]
(SiO_{4/2})ₐ (R¹SiO_{3/2})_{b} (R¹₂SiO_{2/2})_{c} (R¹₃SiO_{1/2})_{d} (R²O_{1/2})ₑ (I)
wherein R¹ is each independently a C₁-C₁₂ substituted or unsubstituted monovalent hydrocarbon group, R² is a hydrogen atom or a C₁-C₆ alkyl group, a, b, c, and d are numbers satisfying 0 ≤ a ≤ 1, 0 ≤ b ≤ 1, 0 ≤ c ≤ 0.5, 0 ≤ d < 1, a + b + c + d = 1, and 0.5 ≤ (a + b) ≤ 1, and e is a number satisfying 0 < e ≤ 4.

2. The coating composition of claim 1 wherein the component (A) is an acrylic polyol, a polyester polyol, or both of them.

3. The coating composition of claim 1 or 2 wherein the component (B) is a compound represented by the following formula (II): 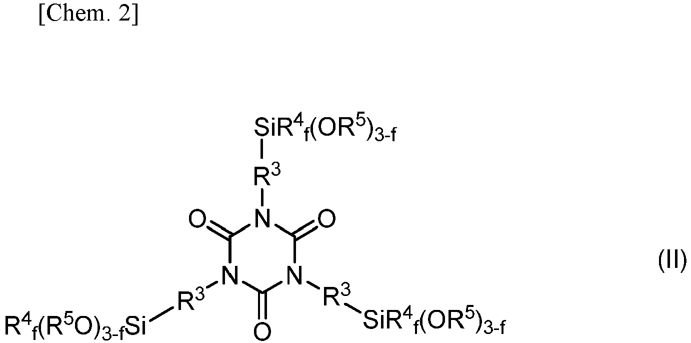 wherein R³ is each independently a C₁-C₂₀ alkylene group, R⁴ is each independently a C₁-C₁₂ substituted or unsubstituted monovalent hydrocarbon group, each R⁵ is a hydrogen atom or a C₁-C₈ alkyl group, and f is each independently 0, 1, or 2.

4. The coating composition of any one of claims 1 to 3 wherein in formula (I), R¹ is each independently a C₁-C₈ alkyl group, a C₂-C₈ alkenyl group, a C₆-C₁₀ aryl group, or a C₇-C₁₀ aralkyl group.

5. The coating composition of claim 4 wherein in formula (I), R¹ is each independently a methyl group, an ethyl group, or a phenyl group.

6. The coating composition of any one of claims 1 to 5 wherein in formula (I), the C₁-C₆ alkyl group accounts for at least 80% of the total number of R².

7. The coating composition of any one of claims 1 to 6 wherein in formula (I), a is 0 < a ≤ 1.

8. The coating composition of any one of claims 1 to 7 wherein in formula (I), d is 0.

9. The coating composition of any one of claims 1 to 8 wherein the component (C) has a kinematic viscosity of 1 to 200 mm²/s at 25°C.

10. The coating composition of any one of claims 1 to 9 further comprising (D) a curing catalyst.

11. A method for preparing the coating composition of any one of claims 1 to 10, the method comprising mixing the components (A) to (C) at 10°C to 40°C.

12. A cured coating formed from the coating composition of any one of claims 1 to 10.

13. A coated article comprising a substrate and the cured coating of claim 12 formed on at least one surface of the substrate directly or via at least one other layer.

14. A method for forming a cured coating on a substrate, comprising applying the coating composition of any one of claims 1 to 10 to at least one surface of a substrate directly or via at least one other layer, and then curing the coating composition.
